# EUROPEAN PATENT SPECIFICATION

(11) **EP 0 724 834 B1**
(45) Date of publication and mention of the grant of the patent: **26.09.2001**
(21) Application number: 96300744.8
(22) Date of filing: 02.02.1996
(51) Int. Cl.: A22C 13/00

(54) **A method of manufacturing an artificial casing and an artificial casing product**
Verfahren zur Herstellung von Kunststoffhüllen und Produkte aus Kunststoffhüllen
Procédé de préparation de boyaux artificiels et produits de boyaux artificiels

(30) Priority: 02.02.1995 FI 950472
(43) Date of publication of application: 07.08.1996
(73) Proprietor: OY VISKO AB, 10901 Hanko (FI)
(72) Inventor: King, Edmund, FIN-10901 Hanko (FI)
(74) Representative: Cheyne, John Robert Alexander Mackenzie

(56) References cited:
- EP-A- 0 369 337
- EP-A- 0 436 275
- EP-A- 0 635 211
- WO-A-95/10190
- DE-B- 1 504 982
- GB-A- 1 172 183
- US-A- 3 922 398

## Description

The invention relates to a method of manufacturing a fibrous cellulose casing and a casing manufactured by this method, according to the preamble of claim 1. Such a method and casing are known from EP-B-0460146.

Generally, artificial cellulose casings, which are alternatively described as fibrous cellulose casings, or simply as fibre-reinforced casings, et cetera, are manufactured from a long fibre paper base and regenerated cellulose from viscose, that is the soluble sodium cellulose xanthate derivative of cellulose. Before subjecting the paper base to this viscose treatment, or impregnation, it is first wet strengthened by the paper manufacturer, also using regenerated cellulose from viscose, or alternatively using other wet strengthening materials such as polyamide epihalohydrin resins, polyvinyl alcohol, hydroxyethyl cellulose, various synthetically produced latices, et cetera, either used singly or in combination one with another, for example combining regenerated cellulose from viscose and a polyamide epichlorohydrin resin such as Kymene (Kymene is a registered trademark of the Hercules Company of the USA), or using mixtures of these. The chief reason for conferring this wet strength on the part of the paper manufacturer is to enable the paper to retain its integrity and withstand the subsequent heavy wet impregnation with the strongly alkaline viscose, which is applied by the casing manufacturer, and the subsequent strongly acidic cellulose coagulation and regeneration stage, when the casing is made. And whereas the paper manufacturer may apply only one to six percent regenerated cellulose from viscose and/or other wet-strengthening resins calculated on the basis of total fibre weight, to provide the necessary wet strength, the casing manufacturer usually applies a quantity of viscose of two to three times the total weight of the paper to construct the casing. In the case of the paper, which may weigh 21 g/m² in total, only 0,21 to 1,26 g/m² would therefore comprise regenerated cellulose from viscose, and the rest fibre, for example, whilst the casing manufacturer would add a further 42 to 63 g/m² regenerated cel lulose from viscose in making the casing of total cellulose weight 63 to 84 g/m². In the commercial situation this fibre-reinforced cellulose would be prepared or plasicized with a quantity of 20 to 25 percent glycerol and moisturized with 5 to 10 percent water, to prevent it drying out and becoming brittle prior to use, to an overall basis weight in the example given of between 78,8 and 119 g/m². It is also worth pointing out that the process for making the paper and the process for making the casing are very different in a number of other important ways, for example, in terms of imparting wet-strength to the paper, this is a relatively easy and inexpensive stage for the paper manufacturer, which can be carried on in-line with paper-making, but totally impracticable and prohibitively expensive for the casing manufacturer who requires the paper fully wet-strengthened from the outset. The fibre furnish of the paper substrate used to make fibrous casing is usually a carefully selected choice of abaca fibres, also known as manila hemp fibres, grown in either the Phillipines or Ecuador, which are subjected to a chemical pulping treatment to remove non-cellulosic material and to soften the fibres for paper-making. A part of this fibre may be provided by alternative plant fibre such as sisal, jute, or wood pulp, etc., but not without affecting the casing strength characteristics, usually in a negative way.

Papers so prepared, of basis weight between 17 and 28 g/m², are well known in the art for manufacturing fibrous cellulose casings, in the range of size typically from 32 to 165 mm in diameter, or even larger, and usually the basis weight of the paper is increased from 17 to 19 g/m², 19 to 21 g/m², 21 to 23 g/m², and so on in stages, as diameter increases and the need for greater strength increases, that is, since the weight of the sausage product increases exponentially as a function of a squaring of the radius of the sausage.

The casing manufacturer's process usually involves unwinding the paper, supplied in rolls by the paper manufacturer, from an unwind stand, by drawing and forming the paper into the shape of a tube with overlapping margins, continuously about its longitudinal axis, by bending actions with the assistance of metal guides, and sticking the margins together using viscose just ahead of the fuller impregnation with the bulk viscose which makes up the reinforced cellulose wall of the casing. The composition of this aqueous viscose solution may vary but an example of 7 to 8 weight percent (wt-%) cellulose, as sodium cellulose xanthate of 30 to 33% xanthate sulphur, 4 to 5 wt-% sodium hydroxide and rest water, with a ball-fall viscosity of 50 to 70 seconds (130 mg steel ball of 3,175 mm diameter over a distance of 20 cm) and a Hottenroth ripening (salt) index of 4 to 5 at a temperature of 25 to 30 degrees Celsius may be regarded typical. Once impregnated, the cellulose of the viscose is coagulated and regenerated into cellulose by passing the impregnated tube through a sulphuric acid and salt bath, usually containing ammonium and sodium sulphate mixtures, followed by various acid and water wash baths to complete the regeneration and remove all remaining sulphur from the viscose. Acid strength may vary but 40 to 60 g/liter and a salt strength between 180 and 260 g/l with repect to sodium sulphate and between 10 and 50 g/l with respect to ammonium sulphate may be regarded typical. Before drying this fibre-reinforced tube it is usually passed through a bath containing a dilute aqueous glycerol solution, of 10 to 20 percent strength, to act as a plasticizer for the cellulose. Drying is conducted preferably in an inflated condition, and tension, throughout the casing machine, is maintained such that the diameter of the casing at the outset, that is the diameter provided by the original width of paper in the roll, less that used for overlapping, is reproduced as far as possible in the finnished casing tube.

The viscose impregnation may be effected by pouring the viscose onto the outer surface of the paper substrate, well ahead of the acid bath, in order to ensure the paper is thoroughly impregnated prior to regeneration of the cellulose with acid, or alternatively the paper-impregnation stage may be effected from a specially constructed viscose die, wherein the viscose is presented under pressure, through the lips of the die, directly onto the outer surface of the paper base, or substrate, whilst being temporarily supported during transit across these lips, by a metal ring or cylinder, the gap between ring and die being such as to allow the paper to pass unimpeded, but not of such a width as to fully dissipate the pressure of the viscose before impregnating the paper, this impregnation being completed by continuing the passage of paper between die and supporting ring for some distance within fixed gap dimensions, and thereafter some distance unsupported free through air before entering the acid coagulation and regeneration bath. In the prior art and particularly the prior art insofar as that which pre-dates European Patent Specification, EP 0 460 146 B1 the first application in the present family of specifications, first published in December 1989, the results of such impregnations are invariably very two-sided owing to the resistance to penetration of papers of 17 g/m² and greater, the greater the weight usually the greater the resistance, and the greater the two-sidedness to viscoses, which, at low velocity, are characterized by relatively high solution viscosity. In still another variant, viscose may be supplied to both sides of the paper simultaneously in order to effect a so-called double-viscose-coating, to ensure the paper reinforcement is disposed as far as possible within, and properly covered by viscose, prior to coagulation and regeneration of the cellulose.

Cellulosic tubings produced in these various ways are tough and strong and have low stretch characteristics. For these reasons they may be used as containers, or casings, for sausages, meats, or other articles of food, particularly in applications where size, in terms of diameter control, is a critical parameter, and where highly mechanized sausage stuffing plant places high demands for consistency of performance, and strength with toughness is at a premium. Because of ever greater demands of packaging machinery with higher through-put rates, and in the case of blister-packaged goods, tighter size control of sausage diameters to meet minimum weight criteria, that is to contain so-called give-away meat levels; or alternatively the exact size requirements of subsequent vacuum-packaging equipment, where a chub of product will be subject to maximum length and diameter tolerances in order to fit pre-sized cartons, or other containers for distribution and retailing. Whilst exact size is achieved from a fibrous casing exhibiting low stretch, this also means that for differences in sausage diameter of only a few millimeters, another size of viscose die has to be used, with all that this entails in terms of separate inventorying on the part of the paper supplier, the casing manufacturer and the sausage maker, etc. In parallel with the development of ever more demanding packaging equipment in the technologically more advanced countries, which in turn has placed ever greater demands on the casing producer to make tougher, stronger and more-size consistent casings, which demands have been met by the fibrous cellulose casing manufacturers, collagen and cellophane casings, or pure cellulose unreinforced by a fibrous substrate, have been developed for less critical market areas where exact size, linked to high through-put rate of product based on highly mechanized stuffing equipment, is not the first or most important selection criterion, but rather flexibility of use and unit cost, have been more important considerations. In this way it can be imagined that these parallel developments have been divergent rather than convergent, which is to say a gap between the two was increasing where, for example, a highly flexible casing but of consistent though by no means exceptional strength was required for mechanized stuffing machinery, but without subsequent packaging equipment also demanding exact size. In this example collagen would have provided the right price level but would not have provided the strength and associated low product breakage rate characteristic of a fibrous casing, and the fibrous casing would be considered over-engineered and too costly.

In recent years this gap has been filled with what may be regarded a hybrid which sought to combine something of the consistency of properties of the fibrous casing but with the elasticity equal to if not superior than that of collagen, whilst being price competitive. The first patent application in which exceptional elasticity was combined with low cost in a fibrous casing, was the specification previously referred to and filed in late 1989. In this application abaca (manila) paper wet-strengthened using regenerated cellulose from viscose, in a basis weight of no more than 15 g/m², and preferably 13 g/m², was used as the long fibre reinforcement to produce a lightweight fibrous casing product of exceptional elasticity properties combined with an exceptional strength to weight ratio, possessing an exceptionally smooth inner surface which, when combined with the casing's lighter weight, provided a means also for significantly reducing salami processing times as an added benefit, that is from say five weeks to four weeks compared to prior art fibre-reinforced casings.

In the present application which may be regarded a continuation application of this first one in the sense that it seeks to achieve the same collection of unique properties, principally combining high elasticity at a good weight to strength ratio in an overall lightweight construction, which will still allow it to compete in market areas prior to 1989 essentially unavailable to the fibrous cellulose casing, but more traditionally served by collagen or pure cellulose casings, the problem has been to use an alternative paper base which does not rely on the natural polymer, cellulose, regenerated from viscose to provide the initial wet strength by the paper manufacturer for subsequent viscosing operations by the casing manufacturer, but which instead relies on alternative synthetic wet-strengthening systems not incorporating viscose or other natural polmers such as chitin as the main ingredient.

Now, as will be apparent from a study of the prior art before 1989 insofar as commercially viable fibrous casing manufacture is concerned, the problems quite often were related to improving the wet strength or reducing the variability of strength of paper substrates typically of the order of 20 to 23 g/m², in order that more consistent casing size or strength could be achieved. The use of polyamide-epihalohydrin resin and cationic polyethylene imine resin to provide an improvement in the alkaline wet tensile paper properties, in the US patent No 4,222,821 is one such example. This application does not relate to the manufacture of fibrous cellulose tubings as such but rather to the manufacture of a paper substrate of improved performance for subsequent conversion into fibrous casing. Another example is US Patent No. 3,433,633 which seeks to improve the quality of the viscose-bonded or wet-strengthened manila hemp paper substrate, for subsequent fibrous cellulose casing manufacture, by using cellulose derivatives of high viscosity to provide stronger casings. The implication according to US Patent Specification 3,433,633 is clearly that the existing 22,7 g/m² substrates lack sufficient strength and therefore teach away from the use of lower substrate paper basis weights, which is an objective of the present application. Non-heat seal teabag papers papers possessing a weight less than 13 g/m² are also known in the prior art. These teabag papers contain abaca and wood pulp fibres, typically between 20 and 40% of either soft- or hard-wood pulp or mixtures thereof together with 60 to 80 % mixed abaca fibres, which contrast with the fibre make-up of the casing paper of the present invention which comprises typically a mixture of pure abaca fibres grown in either the Phillipines or Ecuador. And whilst the paper manufacturing process and machinery used to produce such teabag and casing papers may be regarded similar, the teabag and casing tube manufacturing processes are very different: teabags being produced in the dry state whilst the casings are produced in the wet state, which aspect dictates a much greater demand for wet-strength by the casing manufacturing process. Of course teabags require wet-strength to withstand the tea-infusion process in the teacup or teapot but such requirements are of a very modest order compared to those required during casing manufacture. UK 1 536 216 discusses improvements to teabag and casing papers and supports the foregoing in terms of fibre make-up differences and differences in synthetic wet-strengthening resin levels applied to each type of paper. It is not possible to use these light weight teabag papers to produce the casings of the present invention.

JP-A 174 699 / 1989 is another example of a patent specification which claims advantages for the use of light weight abaca paper, as light as 10 g/m², not for teabags in this case but intended for the manufacture of fibrous casings in which "a novel chitin-treated paper useful as a casing material which meets all the requirements of the prior art with greater wet tensile strength than heretofore" is claimed. That is prior art pre-dating the present application and its predecessor, as a replacement for abaca paper wet-strengthened using more conventional means such as viscose in the range of basis weight of 17 g/m² and greater. As such JP-A 174 699 / 1989 describes very different papers, viz:"..while the base paper to be used in the present invention may be made solely from wood pulp or hemp pulp, one made from a pulp mixture is preferred. The desirable mixing ratio (wood pulp / hemp pulp) by weight normally ranges from 1/99 to 99/1, preferably from 60/40 to 99/1". Strictly speaking the latter preference describes not abaca paper at all but paper made from a preponderance of wood pulp fibres which is totally unsuitable to the requirements of the present application: by definition a different paper to that of present application which is produced from 100 % abaca fibre and wetstrengthened by synthetic resins distinct from chitin. It is also clear that whilst JP-A 174 699 / 1989 seeks protection for the method of wet-strengthening a paper substrate for subsequent conversion into an alledged fibrous casing, it presents few details of how this is to be achieved in practice. One example, Example 1 mentions: "Following this, (that is the paper manufacturing and chitosan treatment stage) the chitosan-treated paper was impregnated with viscose so that the deposit weighed 700 g/m², and the viscose was regenerated by coagulation to give a viscose-converted product". Other examples Examples 6-11 and Comparative Example 2 are quoted where the viscose deposit is given as 500 g/m². Without specifying the cellulose content, caustic soda content, xanthate sulphur content, viscosity, and ripening index for a viscose it is impossible to predict how it will perform in practice. But if it be assumed that in the case of the latter a good basis for comparison exists we simply learn that the chitin-treatment produces a "viscose converted" product which possesses more wet tensile strength than its heavier viscose-treated and viscose-converted counterpart: from the results accompanying this comparison something of the order of 13,5 g/m² chitin-treatment yields the same tensile strength as 17 g/m² viscose-treatment. But it is not an object of the present application to produce fibrous casings which mimic that produced from viscose-treated papers of such conventional basis weights, but rather the objective is to achieve the collection of unique casing properties of EP 0 460 146 B1, which was based on paper substrates of 13 to 15 g/m². And as we shall see this is achieved in the present application using paper substrates of preferably 10 - 12g/m². Whether a chitin-treated paper according to JP-A 174 699 / 1989 of say 10 - 13,5 g/m², that is with equivalent tensile strength to a viscose-treated paper of 17 g/m² and less, possibly as low as 13,5 g/m², are capable of matching the unique properties demonstrated for the articles of this specification can only be a matter for speculation, which is outside the scope of the present application.

Since 1989, significantly, patent specifications have appeared which chart the progress of applying alternative wet-strengthening systems, other than those based on viscose, to treat the fibrous casing abaca fibre paper substrate, that is, using a variety of resin based systems. US 5,063,104 filed early in 1990 is one such example which also high-lights how paper physical properties may be affected in a dramatic or significant manner depending upon what wet-strengthening binder or bonding method is substituted for viscose. One property which is affected significantly, and adversely so, insofar as the requirements of the present applicants' earlier EP 0 460 146 B1 is concerned, is paper stretch or elongation. Reductions of up to 50 percent for wet elongation from the levels obtained for viscose bonding of the paper were obtained in US 5,063,104, and fibrous casing elongation is very much dependent on the substrate paper's elongation.

The present application describes a method to overcome the problems associated with reduced paper stretch which arises from the paper manufacturing process and process chemistry, that is insofar as the paper is treated, in order to make it strong and resistant to alkalis and acids in the wet state, for the casing manufacturer's purposes, as opposed to problems of say a self-inflicted nature on the part of the casing manufacturer. Now in order to make fibrous casings of ever-increasing diameter we have seen in the art prior to 1989 that the requirement for greater strength was met by the use of ever-increasing substrate paper basis weights and/or by the use of strength adjucts to complement that offered by the viscose bond alone, for casings typically using paper weights of 17 g/m² and greater, whilst exceptionally EP 0 460 146 B1 took paper substrates of 13 to 15 g/m² to make a range of light-weight casings from 32 mm diameter up to 105 mm and indeed succeeded in extending the size to include casings with diameters up to 165 mm. In reversing this trend of using heavier weight paper to make wider diameter casings, that is reducing paper basis weight whist reducing casing diameter, a limit is approached by virtue of the fact that a certain minimum paper strength in both dry and wet states is required in order that the paper will withstand draw tension so that it may be unwound from its roll, and thereafter possess sufficient wet-strength, following impregnation with the viscose of the casing manufacturer's process, so that it may successfully be converted into the casing product. Following the impregnation, the substrate paper tube, now saturated with viscose, has minimum strength and spends much of its time during its subsequent passage through the casing manufacturing machine as a flattened tube: the greater the surface area of this tube over turn-over rolls, which are used in the machine to convey it, and not all of which are necessarily driven, the less strength is required to convey it. These requirements for strength may be considered at variance: the larger the casing the easier it can be converted into casing using lighter weight substrate paper, but performing less robustly by the sausage-maker, whilst the narrower casing made with heavy-weight paper possesses adequate strength for the casing manufacturer's purposes, but may provide more strength than is required of the sausage-maker and be considered over-engineered, an expensive alternative as a result.

In order to obtain similar elasticity properties of tubings from viscose-bonded substrate paper using synthetic-resin bonded papers which are capable of being produced on commercially operating paper machines, but of inferior, that is, lower, wet extension or elongation properties compared to substrate papers bonded with regenerated cellulose provided by viscose, it has been found that substrate paper weights need to be reduced from 13 to 15 g/m² to preferably 10 to 12 g/m².

At the same time it was found expedient to confine fibre selection to the various grades of abaca fibre from the Phillipines and preferably Ecuador, that is to those fibres possessing greatest length and fineness.

Unfortunately this development at the same time takes the manufacturing process for the casing into unchartered water insofar as conventional viscose dies are usually engineered with robust and heavy papers in mind, where moderate paper web tensions applied by drive rollers exerted over distances of several meters do not usually cause excessive so-called 'necking-in' of the tube, that is brought about by a simultaneous extension of the tube in its longitudinal direction and a commensurate shrinkage in its transverse direction, which is to say tube diameters are reduced from those defined by the die size. And unless steps are taken to overcome this obstacle the whole process of reducing paper weight to obtain more casing trans-directional extension becomes self-defeating. In order to overcome these difficulties using viscose dies normally used and designed for much heavier paper substrates, of say 21 g/m² of the prior art, it is possible to slow down the whole operation but this approach is not always convenient, and in certain cases may be considered somewhat self-defeating.

The invention is now described in more detail with reference to the accompanying drawings in which:
Figure 1 shows how the tubing is manufactured by first forming the substrate paper into a tube and impregnating it with viscose ahead of the acid coagulation and cellulose regeneration bath.

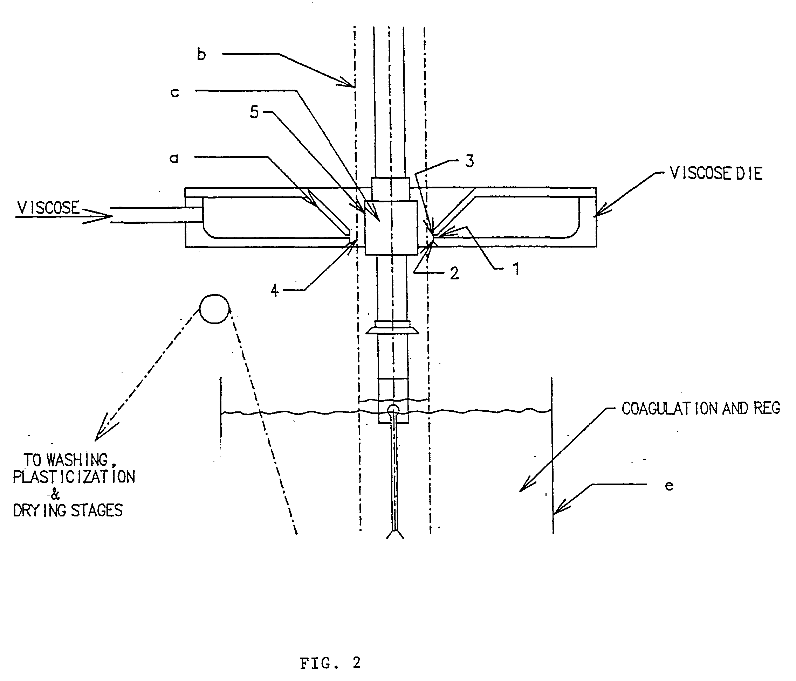

Figure 2, shows the viscose die of Fig. 1 enlarged.

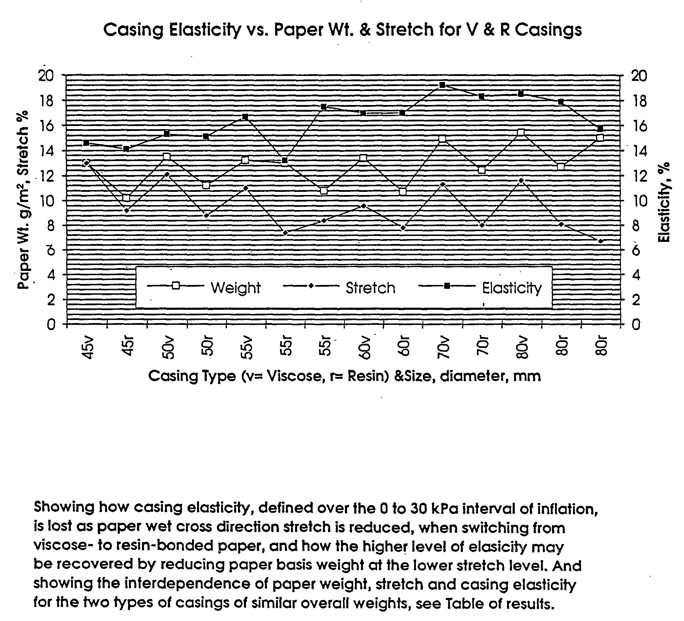

Figure 3, is a diagram showing the relationship between casing elasticity, paper weight and paper wet CD stretch of known tubing and tubing made according to this invention. Accordingly, for the new generation of lightweight fibrous casings constructed of abaca paper substrates suitably wet-strengthened using viscose, and subsequently viscosed a second time by the casing manufacturer, that is as described in EP 0 460 146 B1, a new arrangement of viscose die has been developed for the purpose of single-sided viscosing, which allows casing machine speeds to be increased over those operating for the casing examples specified in EP 0 460 146 B1, at today's commercial levels, employed for conventional fibrous casing lines, whilst at the same time providing a superior impregnation of viscose during the casing manufacturing stage, to ensure smooth surfaces of both casing inner and outer surfaces is obtained, to render the need for double-sided viscosing unnecessary, or undesirable, in the case of these new generation light-weight casings.

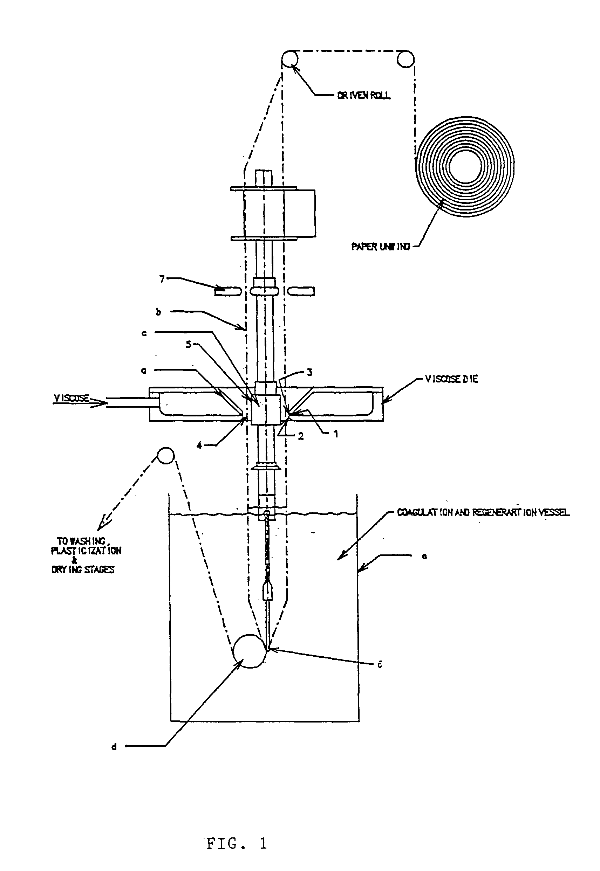

When used for the subject casings of the present application, this new arrangement of die seeks to minimise drag upon impregnating the paper matrix with viscose, and, during the subsequent crucial period before coagulation of the viscose and its regeneration into cellulose has been completed, to the extent of thereafter permiting the casing to be stretched but not irreversibly. This is achieved by minimising the viscosed paper substrate-metal surface contact in the area of the die, and by judicious over-feeding of the paper to the inlet side of the die on the one and, while at the same time carefully controlling the paper draw or tension on the impregnated web on the lead-out side of the die on the other, to minimise the longitudinal extension of the substrate paper and obtain the subject paper embedded within the casing in a non-extended fashion. This new arrangement of viscose die, designed expressly for the purpose of impregnating lightweight papers in the 10 to 15 g/m² range, at line speeds faster than those previously used for treating lightweight paper substrates, will now be described with reference to Figure 1, against the background of those of the prior art which are regarded less than ideal for the subject casings. Paper, providing the casing substrate, is unwound from rolls delivered by the paper supplier in lengths of for example 10,000 meters, that is from paper rolls of weights from about 10 to 50 kg. With the assistance of paper unwind rolls, some of which are driven, the substrate paper is fed to the viscose die over metal guides at 7, see diagram, where it is formed into a tube, in such a manner as to keep the die over-fed with paper. The dimensions of the die are regarded critical for the reasons previously indicated, that is since they impinge on paper extension properties which are affected by frictional forces, or drag, in the region of the die directly following viscose-impregnation, and an important objective of the present application is to reduce the effects of such frictional forces to a minimum. Many of the die arrangements described in the prior art appear without dimensions except insofar as drawings of dies are presented but actual dimensions are often absent. And where actual dimensions have been given, most notably in connection with so-called double-sided viscosing methods, which are not directly relevant to the present application, the ranges have been so wide as to describe non-critical situations. US Patent Application Nos 2,105,273 and 2,144,900 which appeared January 8th, 1938 and January 24th, 1939 are good examples of the former which for many years undoubtedly represented the state of the art of viscose die technology and indeed of fibrous casing manufacture. Sizing the dies of these specifications from their drawings suggests they are of a low viscose pressure type since the gap between the lips of the die, corresponding to dimension 1 of the dies of the present specification would be of the order of 2,5 to 3,0 mm for a die to produce a 45 mm diameter casing. Compared to dies used for many years by the present applicants the die described in these specifications would be regarded of robust design and suited to the requirements of substrate papers in the 21 to 28 g/m² basis weight interval, which characterized fibrous casing manufacture in the era under review. Such dies would not be expected to give rise to good viscose penetration of the paper substrate, and so it is not suprizing that subsequent improvements tended to focus on higher pressure die technology, using narrower gaps between the lips of the dies to increase viscose velocities, and increasingly to focus attention on double-sided viscosing as in, for example US 3,709,720, where the two impregnations with viscose are conducted within a second or a fraction of a second of each other and where Kindl, its author, claims the apparatus such as that used in US 2,105,273 for single-sided viscosing, required adequate time for the viscose to penetrate the paper properly before beginning the cellulose coagulation and regeneration stages under acid, otherwise the poor penetration would have resulted in casings being produced of inferior strength and poorer transparency than where effective saturation of the tube with viscose is first carried out.

An objective of the present invention has been to retain the excellent viscose penetration properties offered by the higher pressure type of die, and thereby contain distances between die and coagulation baths to short distances of the order of 0,3 to 0,6 meters, but only by relying on the need for a single viscose impregnation in order to reduce drag between viscosed paper substrate/ metal surface contact / viscose pressure forces in the area of the die involved with viscose penetration, that is at the lips of the die and directly following them. In order to reduce the effects of drag, paper lead-in and lead-out distances into and out of the area of viscose issue, from the lips of the die, have been kept small, and balanced with machine line speeds and paper basis weight, in an attempt also to achieve the best possible viscose penetration. Accordingly based on a fixed gap through which the viscose passes of 0,5 mm, dimension 1 in Figure 1, the gap between the lips of the die, both upwards and downwards in cylindrical disposition with the formed tube of paper and the face of the supporting metal ring or cylinder, 'c', is fixed at 0,5 to 0,7 mm and preferably 0,55 to 0,60 mm and regarded critical within the context of the other specified dimensions. This has been found suitable to accommodate the relatively narrow range of substrate paper thicknesses, in the range 50 to 80 um, and generally thinner than those of the prior art for 17 to 28 g/m² substrates.

It will be appreciated that the effects of frictional factors increase as basis weight decreases, whilst increased line speeds, which of necessity involve also increased draw or paper web tension, directly following viscose impregnation, since the draw is applied after the turn-over roll, 'd' in Figure 1, also increase the effects of friction. The paper lead-in distance has accordingly been set at between 10 mm and 5 mm in one preferred arrangement of the dies of the present application, dimension 3, Figure 1, depending on the basis weight of paper impregnated and the line speed used. With reasonable line speed running, viscose flow from the point of issue from the lips of the extrusion die, is predominantly downward with the paper, making a seal backwards from the die upper lip 'a' between paper 'b' and paper support 'c' with viscose. Similarly on the lead-out side of the die, the lip width, dimension 2 in Figure 1, of the present application, should be between 10 mm and 2 mm in conjunction with a paper support ring, 'c' in Figure 1, of 10 to 25 mm in length, supporting the paper on its approach to the area of influence of the die's upper lip and extending to a distance horizontal ± 1-2 mm with the lower end of the lower lip in order to contain frictional effects, the combined result of paper / viscose / metal contact-surface interactions which in turn interact with line speed and paper tension effects.

Despite the reduced metal surface contact of the lower lips of these new die arrangements and also of the metal ring paper support element, herein described, together with relatively short distances for the impregnated web to travel before entering the acid bath, but conducted at acceptably high speeds from the commercial standpoint as indicated elsewhere, no loss of quality is observed for the subject fibre reinforced casings either in terms of transparency, strength properties or otherwise. Indeed, rather the converse can be claimed and casings result which possess exceptionally good transparency, exceptionally high weight to strength ratios, and where there exists good evidence by way of Bendtsen smoothness measurements to suggest the physical property mix of the subject casings are of a superior order. So specified the die may be used to advantage to produce the subject casings in the paper basis weight interval from 15 down to 10 g/m² and whilst the longer metal-surface traverse, denoted as dimensions 2 and 3 in Figure 1, of respectively 10 and 10 mm at one end of the range, may be regarded as appropriate for the impregnating of 12 to 15 g/m² substrates at line speeds of up to 10 meters/minute, the shorter metal-surface traverse of 6 and 2 mm is regarded more appropriate for the impregnating of 10 to 13 g/m² substrates at line speeds of 10 meters per minute and greater. The benefit of these new die arrangements then, as will be shown shortly by way of examples, is to obtain similar casing tube extension properties from paper substrates, which rely more exclusively on resins such as the polyamide epihalohydrin types for their wet strength, rather than on small amounts of these together with the use of regenerated cellulose from viscose, or alternatively of regenerated cellulose from viscose used alone, that is because such papers possess inherently less stretch at a given basis weight. And to compensate for this reduced substrate paper stretch, paper basis weight has been reduced to a level of up to 30 to 40 percent lower, which advantage is lost unless the said paper can be treated in a manner which engenders less machine or longitudinal direction tension during the crucial stages of paper impregnation, viscose penetration of the substrate, coagulation of the cellulose of the viscose and its attendent regeneration. Without the use of the new die arrangement the lighter-weight substrates tend to stretch excessively in their machine directions, particularly for smaller diameter casings running at high line speeds, which has the simultaneous effect of reducing their capacity for stretching in their cross directions. To understand the effect this has on casing strength one needs to consider the strength parameter of "toughness", alternatively referred to as "Tensile Energy Absorption" for which internationally recognized standards, such as that put out by TAPPI, the Technical Association of the Pulp and Paper industry in the United States of America, under the reference: T494 om-81, and cross referenced with other standards published elsewhere. Simply put the toughness of a material may be defined as the work done when the specimen is stressed to rupture, in tension under prescribed conditions, as measured by the integral of the tensile stress over the range of tensile stretch from zero to maximum strain.

It is also clear from a study of the stress-strain properties of the substrate paper of fibrous casings that whilst the paper possesses a higher tensile strength in its machine, or length direction, compared to its cross direction, the paper may be said to be equally as tough in both directions by virtue of possessing more stretch in its cross compared to its length direction: that is the areas under their respective stress-strain curves are the same. Classical mechanics demands twice the strength in the hoop of a tube or hose compared to its length direction for optimal performance and a paper substrate possessing minimum sheet directionality has been the best approximation so far reached with a cellulose-based material, and it is the cross direction strength which is crucially important in a casing for subsequent meat stuffing and casing expansion purposes. Anything which detracts from maximising the cross toughness of a casing product, or anything which has the effect of reducing the size expections from a given die-paper combination must be deemed to be counter-productive. And so for these reasons the chief objective of the present application has been to produce casing products as far as possible similar to those in EP 0 460 146 B1 in terms of their stretch and performance properties but using so-called resin-, as opposed to viscose-, bonded paper substrates, using either dies of the prior art under certain operating conditions or the new die arrangements herein described, with improved performance. Examples will now be presented which describe the tube properties sought.

Table 1, and Diagram 1, pages 18 and 19 respectively show how the exceptional casing elasticity properties of VISKO LIGHT products based on abaca paper substrates, wet-strengthened by regenerated cellulose from viscose, together with a small amount of a polyamide epichlorohydrin resin, in the 13,0 to 15,4 g/m² basis weight range, and possessing paper cross direction wet stretch levels in the 9,6 to 13,2 % range, are essentially reproduced in casings of similar overall basis weight but based on abaca paper substrates wet-strengthened exclusively by synthetic resins, without the use of natural polymers such as regenerated cellulose from viscose, which possess cross direction wet stretch levels in the 6,7 to 9,2 % but of significantly lower substrate paper basis weights in the 10,2 to 13 g/m² range. Elasticity is here defined as the capacity of the casing, after soaking in water at 40 degree Celcius for 30 minutes, to expand from an uninflated condition to one of inflation by 30 kPa air pressure, expressed as a percentage of the starting size. Generally speaking two aspects of light-weight casing construction are demonstrated by the data of Table 1, viz, that for a given size of casing, casing elasticity follows paper cross direction stretch at the same paper basis weight but that lower paper cross stretch can be compensated by lower paper basis weight to preserve casing elasticity levels when switching from a viscose plus synthetic-resin bonded to a synthetic-resin bonded substrate, but not without fully taking into account casing machine tension effects, etc., as described above.

Casing burst strengths for the new products based on synthetic-resin bonded paper compare favourably to those based on viscose plus resin-bonded paper in terms of strength per unit weight of substrate. Data is collected in Table 2, page 20, to illustrate this: greater absolute strength is obtained for heavier substrate paper, but relative to paper weight, greater burst coefficients are obtained for the lighter substrates.

Casing Smoothness properties as determined using the Bendtsen method are shown in Table 3, page 21, for light-weight casings produced from viscose plus resin and synthetic-resin(s) bonded paper substrates.

EP 0 460 146 B1 pointed to significant differences between the Bendtsen smoothness properties of fibrous casings produced in accordance with the then prior art based on heavy-weight paper substrates of 17 to 23 g/m², and the light-weight viscose-bonded paper substrates of 13 to 15 g/m², the subject of EP 0 460 146 B1. Whilst the latter showed the lighter weight paper substrates gave rise to casings of smoother inside surfaces compared to those of the prior art, the results of the present application show there are no significant differences between viscose plus resin- and synthetic resin(s)-bonded paper substrates, in the 11,0 to 14,5 g/m² interval of paper substrate basis weight, incorporated in casings of 64,0 to 74,7 g/m², and that the results of the present application are at a similar level to those of novelty in EP 0 460 146 B1.

**TABLE 1**

| CASING ELASTICITY PROPERTIES AS A FUNCTION OF CASING SUBSTRATE PAPER WEIGHT AND TYPE: VISCOSE PLUS RESIN- VERSUS SYNTHETIC RESIN(S)-WET STRENGTHENED. | | | | |
|---|---|---|---|---|
| Casing Size, diameter, mm /Paper Bonding Type | Substrate Paper Basis Weight, g/m² | Paper Wet Cross Direction Stretch, % | Casing Weight g/m² | Casing Elasticity at 0-30 kPa Inflation |
| 45/Viscose∗ | 13,0 | 13,0 | 74,6 | 14,6 |
| 45/Resin(s) | 10,2 | 9,2 | 72,5 | 14,1 |
| 50/Viscose∗ | 13,5 | 12,1 | 70,3 | 15,3 |
| 50/Resin(s) | 11,2 | 8,8 | 73,0 | 15,1 |
| 55/Viscose∗ | 13,2 | 11,0 | 72,2 | 16,7 |
| 55/Resin(s) | 13,0 | 7,4 | 77,4 | 13,2 |
| 55/Resin(s) | 10,8 | 8,4 | 73,8 | 17,5 |
| 60/Viscose∗ | 13,4 | 9,6 | 74,4 | 17,0 |
| 60/Resin(s) | 10,7 | 7,8 | 73,6 | 17,0 |
| 70/Viscose∗ | 14,9 | 11,3 | 78,2 | 19,2 |
| 70/Resin(s) | 12,4 | 8,0 | 76,2 | 18,3 |
| 80/Viscose∗ | 15,4 | 11,6 | 74,6 | 18,5 |
| 80/Resin(s) | 12,7 | 8,1 | 71,5 | 17,9 |
| 80/Resin(s) | 15,0 | 6,7 | 82,6 | 15,7 |

| | | | | |
|---|---|---|---|---|
| ∗Viscose here refers to viscose plus a small amount of a polyamide epihalogenhydrin resin, which resin can be seen not to affect substrate paper cross direction stretch, to an appreciable extent compared to the synthetic resin(s) of the exclusively synthetic resin(s)-bonded substrates, based on polyamide epihalohydrin in these examples, and indeed the higher values are typical of predominantly viscose-bonded paper whilst the lower typical of paper bonded without viscose. | | | | |

**TABLE 2**

| CASING BURST STRENGTH PROPERTIES AS A FUNCTION OF CASING SUBSTRATE PAPER TYPE: VISCOSE PLUS RESIN- VERSUS SYNTHETIC RESIN(S)-WET STRENGTHENED | | | | | |
|---|---|---|---|---|---|
| casing size, diameter (d)mm | paper base weight (w) g/m² | casing weight g/m² | casing burst strength (b) kPa | strength quotient (SQ) b/w | burst coefficient SQ . d. pi /100∗ |
| 45 viscose∗ | 13,0 | 74,6 | 78 | 6,0 | 8,5 |
| 45 resin(s) | 10,2 | 72,5 | 66 | 6,5 | 9,1 |
| 50 viscose∗ | 13,5 | 70,7 | 77 | 5,7 | 9,0 |
| 50 resin(s) | 11,2 | 73,0 | 79 | 7,1 | 11,1 |
| 55 viscose∗ | 13,2 | 72,2 | 71 | 5,4 | 9,3 |
| 55 resin(s) | 10,8 | 73,8 | 68 | 6,3 | 10,9 |
| 60 viscose∗ | 13,4 | 74,4 | 70 | 5,2 | 9,8 |
| 60 resin(s) | 10,7 | 73,6 | 57 | 5,3 | 10,0 |
| 70 viscose∗ | 14,9 | 78,2 | 65 | 4,4 | 9,7 |
| 70 resin(s) | 12,4 | 76,2 | 53 | 4,3 | 9,5 |
| 80 viscose∗ | 15,4 | 74,6 | 54 | 3,5 | 8,8 |
| 80 resin(s) | 12,7 | 71,5 | 52 | 4,1 | 10,3 |

| | | | | | |
|---|---|---|---|---|---|
| ∗Viscose here refers to viscose plus a small amount of a polyamide epihalogenhydrin resin, whilst "resin(s)" refers to those based exclusively on synthetic resin(s)-bonded substrates: based on polyamide epihalohydrin in these examples. | | | | | |

**TABLE 3**

| TUBING SMOOTHNESS PROPERTIES OF SUBJECT LIGHT-WEIGHT TUBINGS: Viscose* vs. Synthetic resin bondeded Substrate Paper | | | | |
|---|---|---|---|---|
| PRODUCT | BENDTSEN SMOOTHNESS, cm3 air/minute | | | |
| diam. mm | Paper Weight, g/m² | Tube Wt. g/m² | Inside Surface | Outside Surface |
| 45 resin(s) | 11,0 | 72,8 | 750 | 170 |
| 45 viscose* | 13,0 | 73,2 | 950 | 190 |
| 50 resin(s) | 11,0 | 67,6 | 725 | 155 |
| 50 viscose* | 13,5 | 64,0 | 900 | 220 |
| 55 resin(s) | 11,0 | 74,7 | 900 | 145 |
| 55 viscose* | 13,5 | 70,0 | 850 | 220 |
| 60 resin(s) | 12,0 | 72,7 | 900 | 125 |
| 80 viscose* | 14,5 | 73,1 | 850 | 160 |

| | | | | |
|---|---|---|---|---|
| *Viscose here refers to viscose plus a small amount of a polyamide epihalogenhydrin resin, whilst "resin(s)" refers to those based exclusively on synthetic resin(s)-bonded substrates: based on polyamide epihalohydrin in these examples. | | | | |

## Claims

1. A method of manufacturing a tubing, or casing to be used in the production of sausages, which method comprises the steps of forming a paper base material of long-fibred manila hemp which, after wet-strengthening, has an air-dry weight of no more than 15 g/m², forming the wet-strengthened paper into tubing, impregnating said tubing by viscose, and passing the tubing through one or more acid and salt baths so as to coagulate the viscose and thereby regenerate the viscose into cellulose in such a manner that the fibres of the paper are embedded and bonded with the regenerated cellulose to form a tubing, and plasticizing the tubing,
**characterised in that** the wet-strengthening of the base paper is effected by synthetic resin(s) or viscose and synthetic resin(s), and in that, in the impregnating of the tubing by viscose, the viscose is presented to the outer surface of the tubing only.

2. A method as claimed in claim 1, wherein the synthetic resin(s)-bonded paper used is of a lower basis weight than paper wet-strengthened by viscose alone or viscose used together with small amounts of synthetic resin(s) in order to achieve elasticity properties substantially similar to one another.

3. A method as claimed in claim 2, wherein the weight of the synthetic resin(s)-bonded paper is reduced about 1 to 4 g/m², preferably 2-3 g/m² in comparison with paper wet-strengthened by viscose in order to obtain the elasticity properties substantially similar to one another.

4. A method as claimed in claim 1 or 2, wherein the paper substrate is wet-strengthened exclusively using synthetic resin(s), which is impregnated by viscose in the tubing manufacturing stage, while the paper weight is 1 to 4 g/m² lighter than paper wet-strengthened by either viscose alone or viscose plus small amounts of synthetic resin(s).

5. A method as claimed in claim 1 to impregnate continuously a paper substrate formed into a tubing, comprising the steps of feeding the viscose under pressure through the lips of a die directly onto the one surface of the tubing and through the paper base or substrate having a weight of 15 g/m² or less, supporting the paper on its other side during transit across these lips, for example by a metal ring or cylinder, the gap between support and die allowing the paper to pass unimpeded prior to impregnating the paper substrate by continuing the passage of the tube between die and supporting ring for a predetermined distance within fixed gap dimensions.

6. A method as claimed in claim 5, wherein the impregnating die is situated outside of the tube with the support inside the tube.

7. A method as claimed in claim 5 or 6, wherein the die has an annular opening against the tube, the distance between the faces of the lips and the surface of the support being 0.5 to 0.7 mm, preferably 0.55 to 0.60 mm, that is the passage through which the substrate paper travels.

8. A method as claimed in any of claims 5, 6 or 7, wherein the length of the supporting ring is between 10 and 25 mm, extending to a distance horizontal (± 1-2 mm) with the lower end of the lower lip of the die.

9. A method as claimed in any of claims 5, 6, 7 or 8, wherein the annular opening of the die is located in the lower part of the die and therefore the viscose is fed in the lower part of the die.

10. A method as claimed in any of claims 5 to 9, wherein the paper lead-in distance between paper support and the upper end of the upper lip of the viscose die, to the point of viscose issue at the lower end of the upper lip, is kept between 9 and 5 mm, whilst the distance on the paper lead-out side, between the point of viscose issue and the lower end of the lower lip, is kept between 9 and 2 mm, and preferably at 5 and 2 mm respectively during higher speed running.

11. A tubing manufactured as claimed in any preceding claim, wherein the basis weight of the manila paper substrate is 10 to 13 g/m².

## Patentansprüche

1. Verfahren zur Herstellung eines Schlauchs oder einer Hülle für die Produktion von Würsten, umfassend die Schritte:
Herstellen eines Papiergrundmaterials aus langfasrigem Manilahanf, das nach der Nässefestigung ein Lufttrockengewicht von nicht mehr 15 Gramm pro Quadratmeter besitzt,
Ausbilden des nässegefestigten Papiers zu einem Schlauch,
Imprägnieren des Schlauchs mit Viskose und Leiten des Schlauchs durch ein oder mehrere Säure- und Salzbäder, so dass die Viskose koaguliert und hierdurch die Viskose in einer Weise in Zellulose regeneriert wird, dass die Papierfasern eingebettet und gebunden sind mit der regenerierten Zellulose und man einen Schlauch erhält, und
Plastifizieren des Schlauchs,
**dadurch gekennzeichnet**,
dass die Nässefestigung des Basispapiers mit synthetischem(n) Harz(en) oder Viskose und synthetischem(n) Harz(en) erfolgt, und
dass beim Imprägnieren des Schlauchs mit Viskose die Viskose nur auf den Außenflächen des Schlauchs zugegen ist.

2. Verfahren nach Anspruch 1, wobei das eingesetzte harzgebundene Papier ein geringeres Grundgewicht besitzt als Papier, das mit Viskose allein oder mit Viskose und geringen Mengen synthetischer Harz(e) nässegefestigt ist, damit im Wesentlichen einander ähnliche Elastizitätseigenschaften erreicht werden.

3. Verfahren nach Anspruch 2, wobei das Gewicht des mit synthetischem(n) Harz(en) gebundenen Papiers auf etwa 1 bis 4 Gramm pro Quadratmeter gesenkt wird, bevorzugt auf 2 bis 3 Gramm pro Quadratmeter, und zwar im Vergleich zu einem Papier, das mit Viskose nässegefestigt wurde, so dass im Wesentlichen einander ähnliche Elastizitätseigenschaften erreicht werden.

4. Verfahren nach Anspruch 1 oder 2, wobei das Papiersubstrat ausschließlich mit synthetischem(n) Harz(en), nässegefestigt ist und beim Schritt der Schlauchherstellung mit Viskose imprägniert wird, während das Gewicht des Papiers mit 1 bis 4 Gramm pro Quadratmeter geringer ist als bei Papier, das mit Viskose allein oder mit Viskose und geringen Mengen synthetischer Harz(e) verfestigt wird.

5. Verfahren nach Anspruch 1 zur kontinuierlichen Imprägnieren eines zu einem Schlauch geformten Papiersubstrats, umfassend die Schritte:
Zuführen der Viskose unter Druck durch die Formlippen direkt auf die eine Schlauchoberfläche und durch die Papierbasis oder das Substrat, das ein Gewicht von 15 Gramm pro Quadratmeter oder weniger besitzt,
Halten des Papiers auf dessen anderer Seite beim Durchgang quer zu den Lippen, bspw. durch einen Metallring oder Zylinder, wobei wegen des Spalts zwischen Halterung und Form das Papier zuvor ungehindert hindurchgehen kann und das Papiersubstrat durch Fortsetzen des Schlauchdurchlaufs zwischen Form und Haltering über eine vorgegebene Strecke zwischen feststehenden Spaltabmessungen imprägniert wird.

6. Verfahren nach Anspruch 5, wobei die Imprägnierform außerhalb des Schlauchs und die Halterung innerhalb des Schlauchs angeordnet ist.

7. Verfahren nach Anspruch 5 oder 6, wobei sich die Form gegenüber dem Schlauch in Ringform öffnet, der Abstand zwischen den Lippenflächen und der Halterungsoberfläche 0,5 bis 0,7 mm beträgt, bevorzugt 0,55 bis 0,60 mm, und das der Durchgang ist, durch den das Papiersubstrat läuft.

8. Verfahren nach irgendeinem der Ansprüche 5, 6 oder 7, wobei die Länge des Halterings zwischen 10 und 25 mm ist und mit dem Unterende der Form-Unterlippe über eine waagrechte Strecke (± 1 bis 2 mm) geht.

9. Verfahren nach irgendeinem der Ansprüche 5, 6, 7 oder 8, wobei die Kreisöffnung der Form im Unterteil der Form angeordnet ist und hierdurch die Viskose in den unteren Teil der Form eingegeben wird.

10. Verfahren nach irgendeinem der Ansprüche 5 bis 9, wobei der Papiereinführabstand zwischen der Papierhalterung und dem oberen Ende der Viskoseform-Operlippe bis zur Viskoseabgabestelle am unteren Ende der Unterlippe zwischen 9 und 5 mm gehalten wird, wohingegen der Abstand auf der Papierauslaufseite zwischen der Viskoseabgabestelle und dem Unterlippen-Unterende zwischen 9 und 2 mm gehalten wird bzw. beim Hochgeschwindigkeitsbetrieb bevorzugt zwischen 5 und 2 mm.

11. Schlauch, hergestellt nach irgendeinem vorhergehenden Anspruch, wobei das Grundgewicht des Manila-Papiersubstrats 10 bis 13 Gramm pro Quadratmeter ist.

## Revendications

1. Procédé de fabrication d'une enveloppe tubulaire, ou d'un boyau destiné à la production de saucisses, lequel procédé comprend les étapes qui consistent à : former un matériau de base en papier, constitué de chanvre de Manille à longues fibres, qui, après un renforcement de la résistance à l'état humide, présente un grammage après séchage à l'air d'au plus 15 g/m² ; donner au papier renforcé à l'état humide la forme d'une enveloppe tubulaire ; imprégner ladite enveloppe tubulaire de viscose ; et faire passer l'enveloppe tubulaire à travers un ou plusieurs bains d'acides et de sels, de façon à faire coaguler la viscose et ainsi régénérer la viscose en cellulose de telle sorte que les fibres du papier soient noyées dans la cellulose régénérée et liées à celle-ci pour former une enveloppe tubulaire ; et plastifier l'enveloppe tubulaire ;
**caractérisé en ce que** le renforcement de la résistance à l'état humide du papier de base est effectué au moyen d'une ou plusieurs résines synthétiques, ou de viscose et d'une ou plusieurs résines, et en ce que, dans l'étape d'imprégnation de l'enveloppe tubulaire par de la viscose, la viscose est présentée uniquement sur la surface extérieure de l'enveloppe tubulaire.

2. Procédé selon la revendication 1, dans lequel le papier lié à une ou plusieurs résines synthétiques qui est utilisé a un grammage inférieur au papier renforcé à l'état humide par de la viscose seule ou par de la viscose utilisée avec de petites quantités d'une ou plusieurs résines synthétiques, afin d'obtenir des propriétés d'élasticité essentiellement similaires pour l'un et l'autre.

3. Procédé selon la revendication 2, dans lequel le grammage du papier lié à une ou plusieurs résines synthétiques est réduit d'environ 1 à 4 g/m², préférentiellement de 2 à 3 g/m², par rapport à celui du papier renforcé à l'état humide par de la viscose, afin d'obtenir des propriétés d'élasticité essentiellement similaires pour l'un et l'autre.

4. Procédé selon la revendication 1 ou 2, dans lequel le renforcement de la résistance à l'état humide du substrat en papier est effectué exclusivement à l'aide d'une ou plusieurs résines synthétiques, qui sont imprégnées par de la viscose dans l'étape de fabrication de l'enveloppe tubulaire, tandis que le grammage du papier est de 1 à 4 g/m² plus léger que celui du papier renforcé à l'état humide par de la viscose seule ou bien par de la viscose plus de petites quantités d'une ou plusieurs résines synthétiques.

5. Procédé selon la revendication 1, pour imprégner en continu un substrat en papier formé en une enveloppe tubulaire, comprenant les étapes qui consistent à : amener la viscose sous pression à travers les lèvres d'une filière, directement sur l'une des surfaces de l'enveloppe tubulaire, et à travers la base ou le substrat en papier ayant un grammage de 15 g/m² ou inférieur ; supporter le papier sur son autre face lors de son passage devant ces lèvres, par exemple par une bague ou un cylindre métallique, l'interstice entre le support et la filière permettant au papier de se déplacer sans gêne avant l'imprégnation du substrat en papier par le fait que le tube se déplace en continu entre la filière et la bague de support, sur une distance prédéterminée comprise dans les dimensions fixées de l'interstice.

6. Procédé selon la revendication 5, dans lequel la filière d'imprégnation est située à l'extérieur du tube, le support étant situé à l'intérieur du tube.

7. Procédé selon la revendication 5 ou 6, dans lequel la filière a une ouverture annulaire contre le tube, la distance entre les faces des lèvres et la surface du support étant de 0,5 à 0,7 mm, de préférence de 0,55 à 0,60 mm, cette distance correspondant au passage à travers lequel le papier formant substrat se déplace.

8. Procédé selon l'une quelconque des revendications 5, 6 ou 7, dans lequel la bague de support a une longueur comprise entre 10 et 25 mm et s'étend jusqu'à une distance horizontale de ± 1 - 2 mm par rapport à l'extrémité inférieure de la lèvre inférieure de la filière.

9. Procédé selon l'une quelconque des revendications 5, 6, 7 ou 8, dans lequel l'ouverture annulaire de la filière est située dans la partie inférieure de la filière, et, par conséquent, la viscose est amenée dans la partie inférieure de la filière.

10. Procédé selon l'une quelconque des revendications 5 à 9, dans lequel la distance d'entrée du papier, entre le support de papier et l'extrémité supérieure de la lèvre supérieure de la filière d'imprégnation de viscose, jusqu'au point de sortie de la viscose à l'extrémité inférieure de la lèvre supérieure, est maintenue entre 9 et 5 mm, tandis que la distance sur le côté sortie du papier, entre le point de sortie de la viscose et l'extrémité inférieure de la lèvre inférieure, est maintenue entre 9 et 2 mm, ces distances étant de préférence maintenues respectivement à 5 et 2 mm lors d'un déplacement plus rapide.

11. Enveloppe tubulaire fabriquée selon l'une quelconque des revendications précédentes, dans laquelle le grammage du substrat en papier manille est compris entre 10 et 13 g/m².
